# FASCICULE DE BREVET EUROPEEN

(11) **EP 2 878 959 B1**
(45) Date de publication et mention de la délivrance du brevet: **21.09.2016**
(21) Numéro de dépôt: 14195731.6
(22) Date de dépôt: 01.12.2014
(51) Int. Cl.: G01P 5/14, G01L 27/00, G01P 21/02, G01P 5/16

(54) **Dispositif et procédé de contrôle d'une sonde de mesure de pression d'un écoulement.**
Vorrichtung und Verfahren zur Kontrolle einer Druckmesssonde eines Flusses
Device and method for controlling a probe for measuring the pressure of a flow

(30) Priorité: 29.11.2013 FR 1302783
(43) Date de publication de la demande: 03.06.2015
(73) Titulaire: Thales, 92400 Courbevoie (FR)
(72) Inventeur: Robert, François, 37390 CHANCEAUX SUR CHOISILLE (FR)
(74) Mandataire: Collet, Alain

(56) Documents cités:
- DE-A1-102004 031 637
- FR-A1- 2 959 822
- US-A1- 2006 123 922
- US-A1- 2006 155 515

## Description

L'invention concerne un dispositif de contrôle d'une sonde à mesure de pression d'un écoulement. L'invention trouve une utilité particulière dans le domaine des sondes de pression mises en oeuvre dans le domaine aéronautique.

En effet, le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt. Les pressions totale Pt et statique Ps fournissent le module de ce vecteur vitesse.

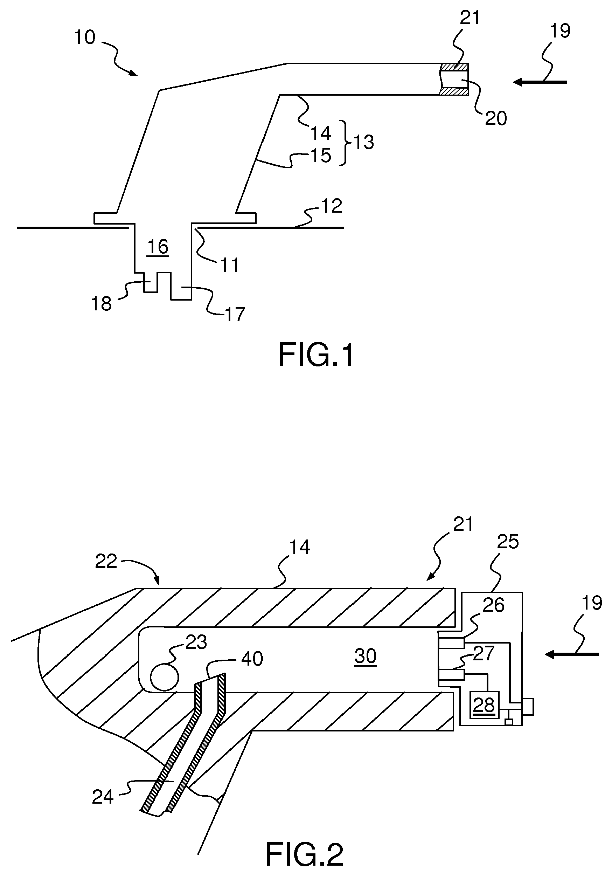

De manière connue, la mesure de la pression totale Pt peut être réalisée à l'aide d'un tube dit de Pitot. Il s'agit d'un tube ouvert à l'une de ses extrémités et obstrué à l'autre. L'extrémité ouverte du tube fait sensiblement face à l'écoulement. Le filet d'air situé en amont du tube est progressivement ralenti jusqu'à atteindre une vitesse quasi nulle à l'entrée du tube. Le ralentissement de la vitesse de ce filet d'air augmente sa pression. Cette pression augmentée forme la pression totale Pt de l'écoulement d'air. Le principe d'une telle sonde de mesure de pression totale est rappelé par la figure 1. La sonde 10 est destinée à être fixée en traversée d'une ouverture 11 réalisée dans la peau 12 d'un aéronef. La sonde 10 comprend une partie externe 13 à la peau 12 et formée par un tube de Pitot 14 porté par un mat 15. La sonde 10 comprend également une partie interne 16 comportant essentiellement un connecteur électrique 17 et un connecteur pneumatique 18. Le connecteur 17 permet de raccorder électriquement la sonde 10 à l'aéronef, par exemple pour raccorder des moyens de réchauffage pour le dégivrage de la sonde 10. Le connecteur 18 permet le raccordement pneumatique du tube de Pitot 14 à un capteur de pression ou autre dispositif de mesure, situé à l'intérieur de la peau 12 de l'aéronef. La sonde 10 est positionnée sur la peau 12 de l'aéronef de telle sorte que le tube de Pitot 14 soit orienté sensiblement suivant un axe longitudinal de l'aéronef, hors couche limite, pour que la direction de l'écoulement, matérialisée par une flèche 19, fasse sensiblement face à un orifice d'entrée 20 situé à une première extrémité 21 du tube de Pitot 14. Dans l'exemple représenté, le tube de Pitot 14 est fixe par rapport à la peau 12 de l'aéronef. Il est bien entendu possible de monter le tube de Pitot 14 sur un mat mobile comme par exemple une palette pouvant s'orienter dans l'axe de l'écoulement comme par exemple décrit dans le brevet publié sous le n° FR 2 665 539.

En pratique, l'écoulement d'air peut véhiculer des particules solides ou liquides, comme par exemple l'eau des nuages, susceptibles de pénétrer dans le tube de Pitot et de s'accumuler dans le tube au niveau de l'extrémité obstruée. Pour éviter qu'une telle accumulation ne vienne perturber la mesure de pression, on prévoit en général un ou plusieurs trous de purge et ainsi que des pièges à eau, pour éviter tout risque d'obstruction des canalisations chargées de transmettre la pression totale aux capteurs de pression situés à l'intérieur de la peau de l'aéronef ou aux instruments de la planche de bord de l'aéronef. Comme représenté sur la figure 2, le tube de Pitot 14 comprend ainsi, à proximité d'une extrémité 22, un trou de purge 23 permettant d'évacuer des particules susceptibles de pénétrer à l'intérieur du tube 14. Toujours au niveau de l'extrémité 22 du tube, un canal pneumatique 24 s'ouvre dans le tube 14 pour y former une prise de pression 40 au niveau de laquelle on cherche à mesurer la pression d'air. La prise de pression 40 est généralement construite de façon à éviter l'ingestion d'eau dans le tube 14 et former ainsi un piège à eau. Le canal 24 est par exemple relié à un capteur de pression non représenté sur la figure 2. Le capteur de pression permet de mesurer de façon effective la pression de l'air régnant à l'intérieur du tube 14 au niveau de son extrémité 22. Hormis le ou les trous de purge 23, dont les sections sont faibles par rapport à celle du tube 14, le tube 14 est fermé au niveau de son extrémité 22. La pression mesurée au niveau de cette extrémité représente donc la pression totale Pt de l'écoulement d'air.

Les trous de purge permettent d'évacuer les liquides et les éventuelles particules pouvant pénétrer dans le tube. Le ralentissement de l'air dans le tube n'est donc pas complet et la mesure de pression totale Pt s'en trouve altérée. Plus précisément, plus on cherche à éviter l'accumulation d'eau ou de particules de taille importante, plus on altère la mesure de pression totale en augmentant les dimensions ou le nombre de trous de purge. Inversement, plus on cherche à améliorer la mesure de pression totale Pt en diminuant les dimensions ou le nombre de trous de purge, plus le risque d'accumulation d'eau ou de particules augmente. Avec un tube de Pitot, on est donc tenu de réaliser un compromis entre qualité de la mesure de pression totale Pt et risque de perturbation de la mesure du fait de la pénétration d'eau, et de particules véhiculées par l'écoulement d'air où la mesure est réalisée.

Dans la vie opérationnelle des aéronefs, les trous de purges peuvent se polluer, du fait d'ingestion de poussière, d'insectes, de résidus de végétaux ou autres corps étrangers. Du fait de leur taille et de la position des tubes de Pitot sur le fuselage d'un aéronef, le contrôle périodique de l'intégrité des trous de purges est malaisé.

La vérification des trous de purge des tubes de Pitot est généralement réalisée de manière visuelle. L'opérateur chargé de la maintenance des avions inspecte le ou les trous de purge à l'aide d'une petite lampe. En cas d'observation de corps étrangers, la sonde est démontée, et ses circuits pneumatiques nettoyés. Cette opération est d'autant plus malaisée que l'avion est de grande taille. L'accès à la sonde et aux trous de purge dont le diamètre est généralement inférieur à 1 mm de diamètre est difficile.

On connait aussi de la demanderesse un dispositif de contrôle destiné à être connecté de manière temporaire à la sonde de mesure de pression, et permettant de contrôler à l'aide d'un émetteur et d'un récepteur acoustiques la non-obstruction des cavités internes et des trous de purges de la sonde. Le principe d'un tel dispositif est notamment décrit par le brevet publié sous la référence FR 2 959 822. Il est aussi rappelé par la figure 2 de la présente demande. Le dispositif de contrôle 25 comprend un émetteur 26 et un récepteur 27 destinés à être connectés à un volume interne 30 de la sonde, formé par l'intérieur du tube 14, le ou les trous de purge 23 et le canal 24. L'émetteur émet un signal acoustique se propageant dans le volume interne 30 et le récepteur est configuré pour capter un signal acoustique observé dans le volume interne 30. Le dispositif comprend aussi des moyens de traitement 28 permettant de comparer le signal acoustique observé dans le volume interne à un signal acoustique de référence mesuré sur une sonde non encrassée, dans le but d'établir la présence de particule dans le volume interne.

Le document DE 10 2004 031637 décrit un procédé de contrôle du positionnement d'un capteur de flux. Le procédé consiste à alerter d'un mauvais positionnement du dispositif de mesure de flux par comparaison d'un signal mesurée à une empreinte déterminée au préalable.

Le document US 2006/155515 décrit un procédé permettant de s'assurer qu'un dispositif de mesure de flux a été correctement installé. Pour cela, le procédé consiste à déterminer un signal caractéristique, à partir d'une séquence temporelle de mesure de flux, à comparer ce signal caractéristique à un signal de référence préétabli, puis à alerter dans le cas d'une installation incorrecte.

Le principe du dispositif repose donc sur une caractérisation de l'architecture du volume interne, au moyen d'une mesure de l'acoustique interne de la sonde. La détection d'une pollution ou d'un encrassement des trous de purge se base sur la comparaison de cette mesure avec un signal de référence mesuré sur une sonde non encrassée. On comprend qu'une connexion incorrecte de la sonde modifie l'acoustique interne mesuré par le dispositif. La comparaison d'un signal acoustique mesuré pour une sonde incorrectement connectée au dispositif, au signal de référence peut ainsi conclure de manière erronée à un encrassement des trous de purge d'une sonde. Pour assurer un contrôle efficace, la connexion du dispositif avec la sonde doit être reproductible. Il est également désirable de disposer de moyens permettant de s'assurer de la fiabilité de la connexion avec la sonde.

A cet effet, l'invention a pour objet un dispositif de contrôle d'une sonde de mesure de pression d'un écoulement ; la sonde comprenant un volume interne et au moins un orifice de communication avec l'extérieur du volume. Le dispositif comprend :
- un émetteur et un récepteur acoustiques,
- des moyens de connexion destinés à connecter le dispositif à la sonde, de façon à ce que l'émetteur émette un signal acoustique se propageant dans le volume interne et de façon à ce que le récepteur capte un signal acoustique observé dans le volume interne,
- des moyens de traitement apte à comparer le signal observé à un signal de référence.
Dans le dispositif selon l'invention, les moyens de connexion sont configurés de manière à ce qu'une connexion incorrecte de la sonde perturbe la propagation dans le volume interne d'un signal acoustique émis par l'émetteur. Les moyens de traitement sont configurés pour détecter une connexion incorrecte de la sonde par comparaison du signal acoustique observé dans le volume interne avec le signal de référence.

Avantageusement, les moyens de connexion sont configurés pour générer, dans le cas d'une connexion incorrecte avec la sonde, une perturbation caractéristique du signal acoustique observé dans le volume interne.

Les moyens de connexion comprennent un manchon ouvert en une première extrémité et comprennent une butée destinée à venir en contact de la sonde correctement connectée au dispositif. Le manchon comprend au moins un trou de détection traversant le manchon disposé à proximité de la butée, destiné à être obstrué par la sonde correctement connectée au dispositif ; l'au moins un trou de détection n'étant pas obstrué dans le cas d'une connexion incorrecte avec la sonde de manière à perturber la propagation dans le volume interne d'un signal acoustique émis par l'émetteur.

Avantageusement, le signal acoustique émis balaye une bande de fréquence donnée et le signal acoustique capté est comparé sur la bande de fréquence à un spectre de référence. Une connexion incorrecte avec la sonde étant détectée par les moyens de traitement, par comparaison du signal observé avec le signal de référence sur une plage prédéfinie de fréquence dans la bande de fréquence.

Avantageusement, le dispositif comprend des moyens d'information activés lorsqu'une connexion incorrecte avec la sonde est détectée.

Avantageusement, le dispositif est destiné à réaliser le contrôle d'une sonde de pression totale, de pression statique, de Pitot/statique ou d'incidence totalement ou partiellement pneumatique.

Avantageusement, les moyens de connexion comprennent en outre des moyens de guidage et de maintien, destinés à faciliter l'insertion de la sonde dans le manchon et à maintenir en position le dispositif sur la sonde.

Avantageusement, le dispositif est destiné à réaliser le contrôle d'une sonde comprenant une portion tubulaire dont une extrémité ouverte constitue un orifice d'entrée d'un filet d'air de l'écoulement dans la sonde. Dans ce cas, le manchon de forme sensiblement tubulaire est destiné à venir enserrer la portion tubulaire de la sonde.

Avantageusement, le dispositif comprend plusieurs trous de détection de forme sensiblement tubulaire s'étendant radialement et répartis angulairement de manière homogène autour du manchon.

Avantageusement, les moyens de guidage et de maintien comprennent un ensemble d'entretoises et de joints.

L'invention porte aussi sur un procédé pour la détection d'une connexion incorrecte entre une sonde de mesure de pression d'un écoulement et un dispositif selon l'invention, caractérisé en ce qu'il comprend des étapes consistant à :
- connecter la sonde au dispositif à l'aide des moyens de connexion,
- émettre un signal acoustique au moyen de l'émetteur,
- capter un signal acoustique au moyen du récepteur,
- détecter une connexion incorrecte de la sonde par comparaison du signal acoustique capté avec le signal acoustique de référence.

L'invention sera mieux comprise et d'autres avantages apparaîtront à la lecture de la description détaillée des modes de réalisation donnés à titre d'exemple sur les figures suivantes.
La figure 1, déjà présentée, représente une sonde de mesure de pression totale selon l'état connu de la technique,
la figure 2, déjà présentée, représente une vue partielle de la sonde de la figure 1 au voisinage de laquelle est disposé un dispositif de contrôle selon l'état connu de la technique,
les figures 3a et 3b représentent selon deux vues en perspective un exemple de dispositif de contrôle d'une sonde de mesure de pression,
la figure 4 illustre l'intérêt du dispositif de contrôle pour la détection d'une connexion incorrecte avec la sonde,
la figure 5 représente un exemple de dispositif de contrôle muni de moyens de guidage et de maintien.

Par souci de clarté, les mêmes éléments portent les mêmes repères dans les différentes figures.

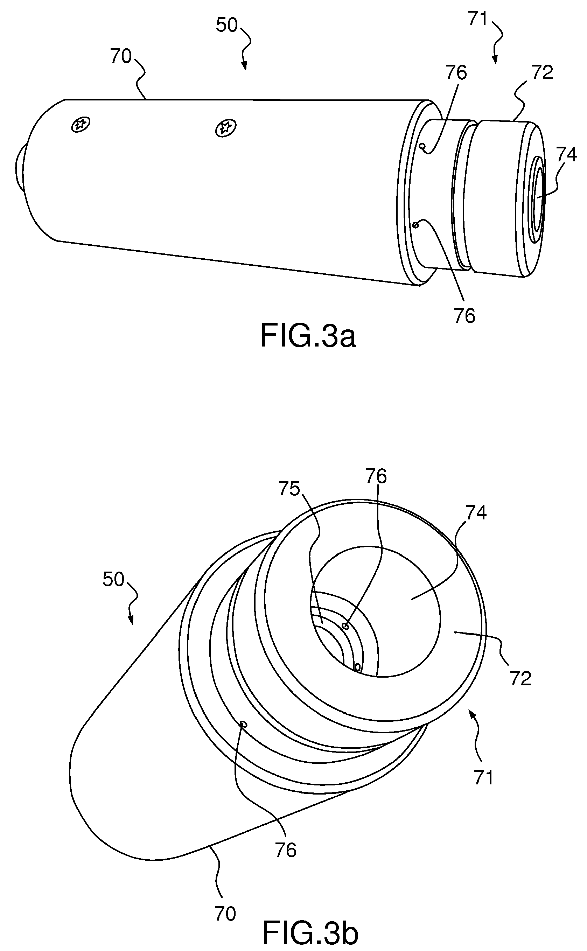

Les figures 3a et 3b représentent selon deux vues en perspective un exemple de dispositif de contrôle selon l'invention. Le dispositif de contrôle 50 est destiné à être connecté de manière temporaire à une sonde de mesure de pression, lors d'une opération de maintenance de l'aéronef. L'invention est décrite en rapport à une sonde de mesure de pression totale, analogue à celle décrite précédemment par la figure 1. Il est bien entendu possible de la mettre en oeuvre pour une sonde de mesure de pression statique, pour une sonde Pitot/statique ou pour une sonde d'incidence totalement ou partiellement pneumatique. De manière générale, le dispositif selon l'invention est destiné au contrôle d'une sonde comprenant un volume interne et au moins un orifice communiquant avec l'extérieur du volume. Dans le cas de la sonde de pression totale précédemment décrite, le volume interne 30 de la sonde comprend l'intérieur du tube de Pitot 14, le ou les trous de purge 23 et le canal 24 par exemple relié à un capteur de pression. Dans une architecture répandue, la sonde comprend deux trous de purges aménagés en regard l'un de l'autre dans le tube de Pitot.

Le principe de la détection d'un encrassement de la sonde comprend des éléments communs à ceux du dispositif décrit en préambule au moyen de la figure 2. Le dispositif de contrôle 50 comprend en particulier :
- un émetteur acoustique 26 et un récepteur acoustique 27,
- des moyens de connexion destinés à connecter le dispositif à la sonde, de façon à ce que l'émetteur 26 émette un signal acoustique se propageant dans le volume interne 30 et de façon à ce que le récepteur 27 capte un signal acoustique observé dans le volume interne 30,
- des moyens de traitement 28 aptes à comparer le signal acoustique observé à un signal acoustique de référence.

Le dispositif de contrôle selon l'invention comprend des moyens de connexion 71 notamment adaptés pour permettre de détecter une connexion incorrecte du dispositif à la sonde. Nous allons décrire ces moyens de connexion en détail dans la suite. Précisons à ce stade que l'émetteur 26 et le récepteur 27, ainsi que les moyens de traitement 28, ne sont pas visibles sur les figures 3a et 3b ; ces composants étant masqués sur les deux vues par les moyens de connexion 71. Le principe de leur fonctionnement et de leur intégration dans le dispositif de contrôle est analogue à celui de la figure 2.

Comme représenté sur les figures 3a et 3b, le dispositif de contrôle 50 comprend un corps 70 et des moyens de connexion 71 destinés à connecter le dispositif de manière temporaire à la sonde de mesure de pression à contrôler. Les moyens de connexion 71 comprennent un manchon 72 relié par une première extrémité au corps 70 et dans le prolongement de celui-ci. Le manchon 72 comprend, en une seconde extrémité, une ouverture 74 configurée de façon à ce que le nez de la sonde puisse venir s'insérer dans le manchon au travers de l'ouverture 74. Les moyens de connexion 71 comprennent également une butée 75, à proximité de la première extrémité du manchon, destinée à être en contact du nez de la sonde. Le nez de la sonde correspond par exemple à l'extrémité 21 du tube de Pitot 14. Dans l'exemple de réalisation représenté, le manchon est de forme sensiblement tubulaire, de sorte à venir enserrer le tube de Pitot sur une portion de sa longueur. Autrement dit, le dispositif peut être destiné à réaliser le contrôle d'une sonde comprenant une portion tubulaire dont une extrémité ouverte 21 forme un orifice d'entrée d'un filet d'air de l'écoulement dans la sonde. Le manchon de forme sensiblement tubulaire est destiné à venir enserrer la portion tubulaire de la sonde. Lorsque la sonde est correctement connectée au dispositif, son extrémité 21, de forme annulaire, vient en contact de la butée annulaire 75.

Les moyens de connexion 71 comprennent également au moins un trou de détection 76 traversant le manchon. Le trou de détection 76 est aménagé dans le manchon à proximité de la butée 75, de sorte à être obstrué par la sonde lorsque celle-ci est en contact de la butée 75. Dans l'exemple de réalisation représenté, les moyens de connexion comprennent six trous de détection, de forme sensiblement tubulaire, s'étendant radialement entre l'intérieur et l'extérieur du manchon, et répartis angulairement de manière homogène.

Ainsi, lorsque la sonde est correctement connectée au dispositif, le ou les trous de détection 76 sont obstrués par les parois latérales du tube 14. L'émetteur et le récepteur acoustiques, qui sont intégrés dans le corps du dispositif à proximité de la butée 75, permettent respectivement d'émettre un signal acoustique se propageant dans le volume interne 30 et de capter un signal acoustique observé dans le volume interne 30. Le signal acoustique mesuré est caractéristique du volume interne de la sonde. Sa comparaison à un signal de référence permet de détecter une éventuelle modification de l'architecture interne de la sonde, par exemple par encrassement des trous de purge 23.

Au contraire, lorsque la sonde est incorrectement connectée au dispositif, c'est-à-dire lorsqu'elle n'est pas en contact de la butée 75, le ou les trous de détection 76 permettent une communication entre l'intérieur et l'extérieur du manchon. Le signal acoustique émis par l'émetteur 26 se propage dans le volume interne de la sonde mais également dans les trous de détection 76 communiquant vers l'extérieur du manchon. Le signal acoustique mesuré n'est donc plus uniquement porteur d'une information sur l'architecture interne la sonde. Le signal acoustique mesuré porte également la signature acoustique du ou des trous de détection 76 traversant le manchon. Dans l'exemple représenté sur les figures 3a et 3b, l'idée est donc d'aménager un ou plusieurs trous de détection dans le manchon, à proximité de la butée 75, de manière à générer, dans le cas d'une connexion incorrecte avec la sonde, une perturbation caractéristique du signal acoustique mesuré. Cette perturbation caractéristique peut ensuite être identifiée par comparaison du signal acoustique mesuré à un signal de référence pour détecter une connexion incorrecte, par les moyens de traitement 28 du dispositif.

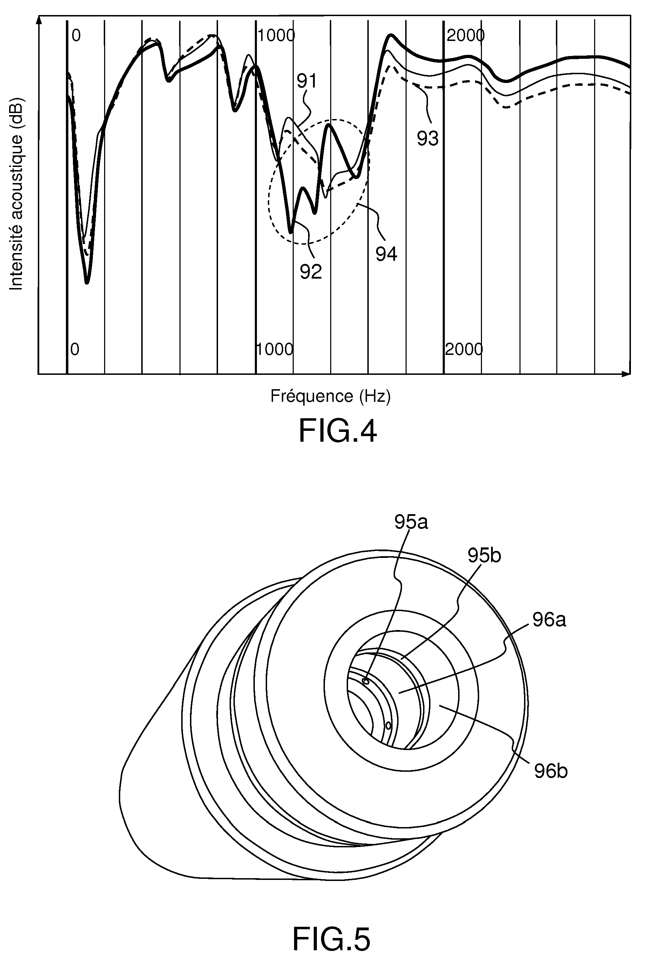

La figure 4 illustre l'intérêt du dispositif de contrôle pour la détection d'une connexion incorrecte avec la sonde. Comme nous l'avons indiqué en préambule de la présente demande, le principe de la détection d'un encrassement des trous de purge par le dispositif se base sur la comparaison de cette mesure avec un signal de référence mesuré sur une sonde non encrassée. Pour cela, le signal acoustique émis par l'émetteur peut être le signal acoustique obtenu en balayant une bande de fréquence donnée, aussi connu sous l'appellation anglaise *chirp.* Le signal acoustique observé par le récepteur est comparé sur la bande de fréquence à un spectre de référence. La bande de fréquence peut couvrir des fréquences acoustiques étendues adaptées au type de sonde et plus généralement au circuit pneumatique complet.

Sur la figure 4 sont représentés des signaux acoustiques mesurés par le dispositif. L'intensité du signal acoustique mesuré est représentée en fonction de la fréquence. Le signal acoustique émis est obtenu en balayant une bande de fréquence croissante entre 0 et 3000Hz. Le signal référencé 91 est un signal acoustique mesuré dans le cas d'une sonde non encrassée et correctement connectée au dispositif, c'est-à-dire en contact de la butée 75. Le signal 91 correspond à un signal de référence pour les moyens de traitement 28. Le signal référencé 92 est un signal acoustique mesuré avec la même sonde non encrassée, mais cette fois incorrectement connectée au dispositif ; son extrémité n'étant pas en contact de la butée. Les trous de détection 76 ne sont pas obstrués par la sonde, de sorte que le signal acoustique émis se propage à la fois dans le volume interne de la sonde et au travers des trous de détection 76. Cette modification de l'acoustique interne implique une perturbation caractéristique 94 du signal acoustique observé dans le volume interne. Cette perturbation caractéristique est en particulier visible dans la plage de fréquence comprise entre 1200 et 1600 Hz. Dans cette plage de fréquence, on constate un écart significatif entre le signal acoustique mesuré 92 pour une sonde incorrectement connectée, et le signal de référence 91 d'une sonde correctement connectée.

Avantageusement, les moyens de traitement 28 peuvent être configurés de manière à identifier cette perturbation caractéristique 94, par comparaison des signaux 91 et 92 sur une plage de fréquence prédéfinie, par exemple comprise entre 1200 et 1600 Hz.

Sur la figure 4 est également représenté un signal référencé 93 correspondant à un signal mesuré pour la même sonde non encrassée, et pour une sonde incorrectement connectée, de la même façon que pour le signal 92, mais cette fois dans le cas d'un dispositif dont le manchon ne comprenant pas de trou de détection. Ce signal 93 permet d'illustrer l'intérêt du ou des trous de détection configurés de manière à générer une perturbation caractéristique, facilement identifiable par traitement du signal. En effet, bien que le signal 93 ne soit pas strictement identique au signal de référence 91, en particulier dans la plage de fréquence 1200-1600 Hz, on constate que les écarts de signaux ne sont pas significatifs. La détection d'une connexion incorrecte est donc malaisée, le risque d'un diagnostique erroné est élevé. Des écarts résultant par exemple d'une différence de température ambiante au moment du test, ou encore d'un encrassement de la sonde, peuvent être interprétés de manière erronée comme une connexion incorrecte. La configuration des moyens de connexion comprenant un ou plusieurs trous de détection permet avantageusement de générer une perturbation caractéristique du signal acoustique mesuré qui se distingue nettement du signal de référence. Les moyens de traitement sont alors configurés pour identifier dans le signal acoustique mesuré la signature de cette perturbation caractéristique.

Avantageusement, le dispositif de contrôle 50 comprend aussi des moyens d'information, activés lorsqu'un écart entre le signal acoustique mesuré et le signal de référence dépasse un seuil prédéfini dans une plage de fréquence prédéfinie, ou autrement dit lorsqu'une connexion incorrecte est détectée par identification de la perturbation caractéristique 94 par les moyens de traitement. Les moyens d'informations peuvent être formés par un voyant qu'un opérateur peut observer pendant une opération de contrôle. Les moyens d'informations peuvent également être formés au moyen d'un dispositif d'alerte sonore.

La figure 5 représente un dispositif de contrôle muni de moyens de guidage et de maintien. On a indiqué que le dispositif de contrôle est destiné à être connecté à la sonde de manière temporaire lors d'une opération de maintenance. Pour faciliter cette opération de maintenance par un opérateur, le dispositif peut avantageusement comprendre des moyens de guidage pour l'insertion de la portion tubulaire de la sonde dans le manchon du dispositif, et des moyens de maintien permettant de s'assurer que le dispositif connecté à la sonde reste en position. Dans l'exemple de réalisation représenté sur la figure 5, les moyens de guidage et de maintien comprennent un ensemble de joints et d'entretoise. Avantageusement, les moyens de guidage et de maintien comprennent deux entretoises 96a et 96b, intercalés entre deux joints 95a et 95b.

Nous avons représenté et décrit au travers des figures 3a, 3b et 5 un premier exemple de dispositif de contrôle dont les moyens de connexion permettent de détecter une connexion incorrecte par obstruction, par la sonde, de trous de détection aménagés dans les moyens de connexion. Il est bien entendu que cet exemple n'est pas limitatif de la présente invention. D'autres variantes sont également envisagées, par exemple mettant en oeuvre un dispositif de basculement venant ouvrir ou fermer une cavité du dispositif lorsque la sonde est correctement connectée. Ainsi, la présente invention couvre de manière générale un dispositif comprenant des moyens de connexion configurés de manière à ce qu'une connexion incorrecte de la sonde perturbe la propagation dans le volume interne d'un signal acoustique émis par l'émetteur, ou autrement dit de manière à générer, dans le cas d'une connexion incorrecte, une perturbation caractéristique du signal acoustique observé dans le volume interne de la sonde. En outre, les moyens de traitement du dispositif sont configurés pour détecter une connexion incorrecte de la sonde par comparaison du signal acoustique observé dans le volume interne avec le signal de référence.

Cette configuration des moyens de connexion permet de détecter une connexion incorrecte de manière simple et peu coûteuse, par des moyens de connexion passifs et un traitement de signal approprié. Cette solution présente aussi l'intérêt de limiter une surpression, potentiellement destructrice pour le microphone, qui pourrait être engendrée par un opérateur mettant le doigt sur l'ouvertur, entrainant une augmentation locale de la pression au niveau de l'émetteur et du récepteur. Cette configuration est surtout particulièrement avantageuse en comparaison de solutions alternatives qui mettraient en oeuvre une interface de connexion électromécanique entre la sonde et le dispositif.

L'invention porte aussi sur un ensemble comprenant une sonde de mesure de pression et un dispositif de contrôle ayant les caractéristiques précédemment décrites.

L'invention porte enfin sur un procédé de détection d'une connexion incorrecte d'un dispositif de contrôle à une sonde de mesure de pression. Le procédé selon l'invention comprend en particulier des étapes consistant à :
- connecter la sonde au dispositif à l'aide des moyens de connexion,
- émettre un signal acoustique au moyen de l'émetteur,
- capter un signal acoustique au moyen du récepteur,
- détecter une connexion incorrecte par comparaison du signal observé avec le signal de référence.

## Revendications

1. Dispositif de contrôle d'une sonde de mesure de pression d'un écoulement ; la sonde (10) comprenant un volume interne (30) et au moins un orifice (20) de communication avec l'extérieur du volume (30) ; le dispositif comprenant:
• un émetteur (26) et un récepteur (27) acoustiques,
• des moyens de connexion (71) destinés à connecter le dispositif à la sonde (10), de façon à ce que l'émetteur (26) émette un signal acoustique se propageant dans le volume interne (30) et de façon à ce que le récepteur (27) capte un signal acoustique observé dans le volume interne (30),
• des moyens de traitement (28) apte à comparer le signal observé à un signal de référence;
le dispositif étant **caractérisé en ce que** les moyens de connexion (71) sont configurés de manière à ce qu'une connexion incorrecte de la sonde (10) perturbe la propagation dans le volume interne (30) d'un signal acoustique émis par l'émetteur (26),
**en ce que** les moyens de traitement (28) sont configurés pour détecter une connexion incorrecte de la sonde par comparaison du signal acoustique observé dans le volume interne (30) avec le signal de référence,
**en ce que** les moyens de connexion (71) comprennent un manchon (72) ouvert en une première extrémité (74) et comprennent une butée (75) destinée à venir en contact de la sonde (10) correctement connectée au dispositif ; et **en ce que** le manchon (72) comprend au moins un trou de détection (76) traversant le manchon (72) disposé à proximité de la butée (75), destiné à être obstrué par la sonde (10) correctement connectée au dispositif ; l'au moins un trou de détection (76) n'étant pas obstrué dans le cas d'une connexion incorrecte avec la sonde (10) de manière à perturber la propagation dans le volume interne (30) d'un signal acoustique émis par l'émetteur (26).

2. Dispositif selon la revendication 1, dont les moyens de connexion (71) sont configurés pour générer, dans le cas d'une connexion incorrecte avec la sonde (10), une perturbation caractéristique (94) du signal acoustique observé dans le volume interne (30).

3. Dispositif selon l'une des revendications précédentes, dont le signal acoustique émis balaye une bande de fréquence donnée et dont le signal acoustique capté est comparé sur la bande de fréquence à un spectre de référence ; une connexion incorrecte avec la sonde (10) étant détectée par les moyens de traitement (28), par comparaison du signal observé avec le signal de référence sur une plage prédéfinie de fréquence dans la bande de fréquence.

4. Dispositif selon l'une des revendications précédentes, comprenant des moyens d'information activés lorsqu'une connexion incorrecte avec la sonde (10) est détectée.

5. Dispositif selon l'une des revendications précédentes, **caractérisé en ce qu'**il est destiné à réaliser le contrôle d'une sonde de pression totale (10), de pression statique, de Pitot/statique ou d'incidence totalement ou partiellement pneumatique.

6. Dispositif selon l'une des revendications précédentes, dont les moyens de connexion (71) comprennent en outre des moyens de guidage et de maintien (95a, 95b, 96a, 96b), destinés à faciliter l'insertion de la sonde (10) dans le manchon et à maintenir en position le dispositif sur la sonde (10).

7. Dispositif selon la revendication 6, dont les moyens de guidage et de maintien (95a, 95b, 96a, 96b) comprennent un ensemble d'entretoises (96a, 96b) et de joints (95a, 95b).

8. Dispositif selon l'une des revendications précédentes, caractérisé en qu'il est destiné à réaliser le contrôle d'une sonde (10) comprenant une portion tubulaire (14) dont une extrémité ouverte (21) constitue un orifice d'entrée (20) d'un filet d'air de l'écoulement dans la sonde (10), et en ce que le manchon (72) de forme sensiblement tubulaire est destiné à venir enserrer la portion tubulaire (14) de la sonde (10).

9. Dispositif selon la revendication 8, comprenant plusieurs trous de détection (76) de forme sensiblement tubulaire s'étendant radialement et répartis angulairement de manière homogène autour du manchon (72).

10. Procédé pour la détection d'une connexion incorrecte entre une sonde (10) de mesure de pression d'un écoulement et un dispositif (50) selon l'une des revendications précédentes, **caractérisé en ce qu'**il comprend des étapes consistant à :
• connecter la sonde (10) au dispositif (50) à l'aide des moyens de connexion (71),
• émettre un signal acoustique au moyen de l'émetteur (26),
• capter un signal acoustique au moyen du récepteur (27),
• détecter une connexion incorrecte de la sonde (10) par comparaison du signal acoustique capté avec le signal acoustique de référence.

## Patentansprüche

1. Vorrichtung zum Steuern einer Sonde zum Messen des Drucks eines Flusses, wobei die Sonde (10) ein Innenvolumen (30) und wenigstens eine Öffnung (20) zum Verbinden mit der Außenseite des Volumens (30) umfasst, wobei die Vorrichtung Folgendes umfasst:
• einen akustischen Sender (26) und Empfänger (27);
• Verbindungsmittel (71) zum Verbinden der Vorrichtung mit der Sonde (10), so dass der Sender (26) ein akustisches Signal sendet, das sich im Innenvolumen (30) ausbreitet, und so dass der Empfänger (27) ein akustisches Signal erfasst, das im Innenvolumen (30) beobachtet wird;
• Verarbeitungsmittel (28) zum Vergleichen des beobachteten Signals mit einem Referenzsignal;
wobei die Vorrichtung **dadurch gekennzeichnet ist, dass** die Verbindungsmittel (71) so konfiguriert sind, dass eine inkorrekte Verbindung der Sonde (10) die Ausbreitung eines vom Sender (26) gesendeten akustischen Signals im Innenvolumen (30) stört,
dadurch, dass die Verarbeitungsmittel (28) zum Erkennen einer inkorrekten Verbindung der Sonde durch Vergleichen des im Innenvolumen (30) beobachteten akustischen Signals mit dem Referenzsignal konfiguriert sind,
dadurch, dass die Verbindungsmittel (71) eine Manschette (72) umfassen, die an einem ersten Ende (74) offen ist und einen Anschlag (75) aufweist, der mit der korrekt mit der Vorrichtung verbundenen Sonde (10) in Kontakt kommt, und dadurch, dass die Manschette (72) wenigstens ein Erkennungsloch (76) umfasst, das die Manschette (72) durchquert, in der Nähe des Anschlags (75) angeordnet, dazu bestimmt, um von der korrekt mit der Vorrichtung verbundenen Sonde (10) blockiert zu werden, wobei das wenigstens eine Erkennungsloch (76) im Falle einer inkorrekten Verbindung mit der Sonde (10) nicht blockiert wird, um die Ausbreitung eines von dem Sender (26) gesendeten akustischen Signals im Innenvolumen (30) zu stören.

2. Vorrichtung nach Anspruch 1, wobei die Verbindungsmittel (71) zum Erzeugen, im Falle einer inkorrekten Verbindung mit der Sonde (10), einer charakteristischen Störung (94) des im Innenvolumen (30) beobachteten akustischen Signals konfiguriert ist.

3. Vorrichtung nach einem der vorherigen Ansprüche, wobei das gesendete akustische Signal ein bestimmtes Frequenzband abtastet und wobei das erfasste akustische Signal auf dem Frequenzband mit einem Referenzspektrum verglichen wird, wobei eine inkorrekte Verbindung mit der Sonde (10) von dem Verarbeitungsmittel (28) durch Vergleichen des beobachteten Signals mit dem Referenzsignal auf einem vorbestimmten Frequenzbereich in dem Frequenzband erkannt wird.

4. Vorrichtung nach einem der vorherigen Ansprüche, die Informationsmittel umfasst, die aktiviert werden, wenn eine inkorrekte Verbindung mit der Sonde (10) erkannt wird.

5. Vorrichtung nach einem der vorherigen Ansprüche, **dadurch gekennzeichnet, dass** sie zum Steuern einer Sonde (10) für Gesamtdruck, statischen Druck, Pitot/Statik-Druck oder eine voll- oder teilpneumatische Inzidenz bestimmt ist.

6. Vorrichtung nach einem der vorherigen Ansprüche, wobei die Verbindungsmittel (71) ferner Führungs- und Haltemittel (95a, 95b, 96a, 96b) zum Erleichtern des Einführens der Sonde (10) in die Manschette und zum Halten der Vorrichtung in Position an der Sonde (10) umfasst.

7. Vorrichtung nach Anspruch 6, wobei die Führungs- und Haltemittel (95a, 95b, 96a, 96b) einen Satz von Abstandshaltern (96a, 96b) und Dichtungen (95a, 95b) umfasst.

8. Vorrichtung nach einem der vorherigen Ansprüche, **dadurch gekennzeichnet, dass** sie eine Sonde (10) steuern soll, die einen tubulären Abschnitt (14) umfasst, von dem ein offenes Ende (21) eine Einlassöffnung (20) für einen Luftstrom des Flusses in der Sonde (10) bildet, und dadurch, dass die im Wesentlichen tubuläre Manschette (72) den tubulären Abschnitt (14) der Sonde (10) einschließen soll.

9. Vorrichtung nach Anspruch 8, die mehrere im Wesentlichen tubuläre Erkennungslöcher (76) umfasst, die radial verlaufen und winkelmäßig auf homogene Weise um die Manschette (72) verteilt sind.

10. Verfahren zum Erkennen einer inkorrekten Verbindung zwischen einer Sonde (10) zum Messen des Drucks eines Flusses und einer Vorrichtung (50) nach einem der vorherigen Ansprüche, **dadurch gekennzeichnet, dass** es die folgenden Schritte beinhaltet:
• Verbinden der Sonde (10) mit der Vorrichtung (50) mit Hilfe der Verbindungsmittel (71);
• Senden eines akustischen Signals mittels des Senders (26);
• Erfassen eines akustischen Signals mittels des Empfängers (27);
• Erkennen einer inkorrekten Verbindung der Sonde (10) durch Vergleichen des erfassten akustischen Signals mit dem akustischen Referenzsignal.

## Claims

1. A device for controlling a flow-pressure measurement probe, said probe (10) comprising an internal volume (30) and at least one orifice (20) for communicating with the exterior of said volume (30), said device comprising:
• an acoustic transmitter (26) and receiver (27);
• connection means (71) intended to connect said device to said probe (10), so that said transmitter (26) transmits an acoustic signal propagating inside said internal volume (30) and so that said receiver (27) captures an acoustic signal observed inside said internal volume (30);
• processing means (28) capable of comparing said observed signal with a reference signal;
said device being **characterised in that** said connection means (71) are configured so that an incorrect connection of said probe (10) interferes with the propagation inside said internal volume (30) of an acoustic signal transmitted by said transmitter (26),
**in that** said processing means (28) are configured to detect an incorrect connection of said probe by comparing said acoustic signal observed inside said internal volume (30) with said reference signal,
**in that** said connection means (71) comprise a sleeve (72) that is open at a first end (74) and comprise a stop (75) intended to come into contact with said probe (10) when it is correctly connected to said device, and **in that** said sleeve (72) comprises at least one detection hole (76) that passes through said sleeve (72), disposed in the vicinity of said stop (75) and which is intended to be blocked by said probe (10) when it is correctly connected to said device, with the at least one detection hole (76) not being blocked in the event of an incorrect connection with said probe (10), so as to interfere with the propagation inside said internal volume (30) of an acoustic signal transmitted by said transmitter (26).

2. The device according to claim 1, wherein said connection means (71) are configured to generate, in the event of an incorrect connection with said probe (10), a characteristic interference (94) of said acoustic signal observed inside said internal volume (30).

3. The device according to any one of the preceding claims, wherein said transmitted acoustic signal scans a determined frequency band and wherein said detected acoustic signal is compared, on said frequency band, to a reference spectrum, an incorrect connection with said probe (10) being detected by said processing means (28) by comparing said observed signal to said reference signal over a predetermined frequency range in said frequency band.

4. The device according to any one of the preceding claims, comprising information means that are activated when an incorrect connection with said probe (10) is detected.

5. The device according to any one of the preceding claims, **characterised in that** it is intended to control a total pressure, static pressure, Pitot/static pressure or fully or partially pneumatic incidence probe (10).

6. The device according to any one of the preceding claims, wherein said connection means (71) further comprise guidance and retention means (95a, 95b, 96a, 96b) intended to facilitate the insertion of said probe (10) into said sleeve and to hold said device in position on said probe (10).

7. The device according to claim 6, wherein said guidance and retention means (95a, 95b, 96a, 96b) comprise a set of spacers (96a, 96b) and of seals (95a, 95b).

8. The device according to any one of the preceding claims, **characterised in that** it is intended to control a probe (10) comprising a tubular portion (14), an open end (21) of which forms an inlet orifice (20) for an air stream of the flow inside said probe (10), and **in that** said substantially tubular shaped sleeve (72) is intended to enclose said tubular portion (14) of said probe (10).

9. The device according to claim 8, comprising a plurality of substantially tubular shaped detection holes (76) that extend radially and are distributed angularly in a homogenous manner around said sleeve (72).

10. A method for detecting an incorrect connection between a flow-pressure measurement probe (10) and a device (50) according to any one of the preceding claims, **characterised in that** it comprises the following steps:
• connecting said probe (10) to said device (50) using said connection means (71);
• transmitting an acoustic signal by means of said transmitter (26);
• capturing an acoustic signal by means of said receiver (27);
• detecting an incorrect connection of said probe (10) by comparing said captured acoustic signal to said reference acoustic signal.
